# EUROPÄISCHE PATENTANMELDUNG

(11) **EP 4 517 222 A1**
(43) Veröffentlichungstag der Anmeldung: **05.03.2025**
(21) Anmeldenummer: 23200617.1
(22) Anmeldetag: 28.09.2023
(51) Int. Cl.: F25B 43/00

(54) **KÄLTEMITTEL-AKKUMULATOR**

(30) Priorität: 29.08.2023 EP 23194053
(71) Anmelder: TI Automotive Technology Center GmbH, 76437 Rastatt (DE)
(72) Erfinder: BRIXNER, Sebastian, 68535 Edingen-Neckarhausen (DE); MERZ, Werner, 76571 Gaggenau (DE); KOCUREK, Konrad, 43-100 Tychy (PL); HOß, Nicolas, 76437 Rastatt (DE)
(74) Vertreter: Reiser & Partner Patentanwälte mbB

(57) **Zusammenfassung**

Kältemittel-Akkumulator (1), umfassend ein Gehäuse (2) mit zumindest einer Einlassöffnung (3) und zumindest einer Auslassöffnung (4), wobei in dem Gehäuse (2) eine Einrichtung (5) angeordnet ist, wobei die Einrichtung der Einlassöffnung (3) und/oder der Auslassöffnung (4) zugeordnet ist.

## Beschreibung

Die Erfindung betrifft einen Kältemittel-Akkumulator, umfassend ein Gehäuse mit zumindest einer Einlassöffnung und zumindest einer Auslassöffnung.

Ein derartiger Kältemittel-Akkumulator kommt häufig in mobilen Klimaanlagen, beispielsweise in Fahrzeug-Klimaanlagen, zum Einsatz.

In einer Klimaanlage zirkuliert ein Kältemittel, welches durch einen Verdichter, bzw. Kompressor auf ein höheres Druckniveau befördert wird. Zur Gewährleistung der Funktionsfähigkeit ist es dabei erforderlich, den Verdichter mit einem Schmiermittel zu versorgen. Während des Verdichtungsvorgangs kann dabei ein Teil des Schmiermittels in das Kältemittel gelangen und dadurch in dem Kältemittel zirkulieren. Damit das Schmiermittel nicht dauerhaft im Kühlkreislauf zirkuliert, sondern dem Verdichter wieder zugeführt werden kann, wird das Schmiermittel in einem Kältemittel-Akkumulator von dem Kältemittel abgetrennt. Der Akkumulator umfasst zumeist ein flaschenförmiges Gehäuse, welches an der Oberseite durch einen Deckel verschlossen ist, wobei in den Deckel eine Einlassöffnung und eine Auslassöffnung eingebracht sind.

Das Kältemittel strömt über die Einlassöffnung in den Akkumulator ein und wird durch eine in dem Gehäuse eingeordnete Einrichtung derart beeinflusst, dass sich innerhalb des Gehäuses eine Strömung ausbildet, bei der das Schmiermittel von dem Kältemittel abgetrennt wird. Das Schmiermittel sammelt sich schließlich im Bodenbereich des Gehäuses an und kann über ein Saugrohr oder dergleichen aus dem Akkumulator abgeführt und dem Verdichter wieder zugeführt werden.

Ein weiteres Problem stellt Wasser dar, welches in den Kältekreislauf gelangt ist, beispielsweise während der Montage. Um das Wasser zu entfernen, ist es aus dem Stand der Technik bekannt, in dem Akkumulator ein Trockenmittel, beispielsweise auf der Basis von Silikagel, anzuordnen. Das Trockenmittel befindet sich in einem luftdurchlässigen Behältnis und nimmt Wasser auf, welches in dem durch den Akkumulator strömenden Kältemittel enthalten ist.

Der Erfindung liegt die Aufgabe zugrunde, einen Kältemittel-Akkumulator bereitzustellen, der kostengünstig herstellbar ist und eine lange Gebrauchsdauer aufweist.

Diese Aufgabe wird mit den Merkmalen von Anspruch 1 gelöst. Auf vorteilhafte Ausgestaltungen nehmen die Unteransprüche Bezug.

Der erfindungsgemäße Kältemittel-Akkumulator umfasst ein Gehäuse mit zumindest einer Einlassöffnung und zumindest einer Auslassöffnung, wobei in dem Gehäuse eine Einrichtung angeordnet ist, wobei die Einrichtung der Einlassöffnung und/oder der Auslassöffnung zugeordnet ist.

Die in dem Gehäuse angeordnete Einrichtung ermöglicht eine Strömungsbeeinflussung des über die Einlassöffnung strömenden Kältemittels und kann darüber hinaus mit weiteren Funktionen versehen sein, beispielsweise zur Entnahme des sich im Bodenbereich des Gehäuses ansammelnden Schmiermittels. Die Einrichtung ist vorzugsweise ein separates Bauteil, welches in das Gehäuse eingesetzt ist.

Die Einrichtung kann zumindest ein Leitelement zur Beeinflussung der Strömung des über die Einlassöffnung in das Gehäuse einströmenden Kältemittels aufweisen. Dabei kann das Leitelement insbesondere einen abschnittsweise gebogenen Kanal aufweisen. Das über die Einlassöffnung einströmende Kältemittel wird über den Kanal in das Innere des Gehäuses geleitet und durch den abschnittsweise gebogenen Kanal wird die Strömung des Kältemittels abgelenkt. Dabei kann sich ein Wirbelstrom ausbilden, welcher den Abscheidegrad des in dem Kältemittel mitgeführten Schmiermittels verbessert. Durch die auf das Schmiermittel einwirkende Zentrifugalkraft scheidet sich das Schmiermittel an der Wandung des Gehäuses aus dem Kältemittel ab und sammelt sich im Bodenbereich an.

Das Gehäuse kann durch einen Deckel verschlossen sein, wobei die Einlassöffnung und die Auslassöffnung in den Deckel eingebracht sind. Dadurch vereinfacht sich die Herstellbarkeit des Akkumulators und es ist auch möglich, Deckel und Gehäuse aus unterschiedlichen Materialien zu fertigen. Der Deckel kann beispielsweise aus metallischem Werkstoff und das Gehäuse aus einem Faserverbundwerkstoff bestehen. Alternativ kann das Gehäuse ebenfalls aus metallischem Werkstoff bestehen. Die Einrichtung ist vorzugsweise aus spritzgießfähigem Kunststoff ausgebildet.

Die Einrichtung kann formschlüssig an dem Deckel gehalten sein. Bei dieser Ausgestaltung können Einrichtung und Deckel eine vormontierte Einheit bilden, welche in das Gehäuse eingesetzt werden kann, wobei nach dem Einsetzen des Deckels Gehäuse und Deckel mediendicht miteinander verbunden werden. Durch die formschlüssige Verbindung von Einrichtung und Deckel ist die Einrichtung fest und verliersicher mit dem Deckel verbunden und die Verbindung kann einfach und ohne zusätzliche Hilfsmittel hergestellt werden. Die Verbindung von Gehäuse und Deckel kann als Crimpverbindung ausgeführt sein. Zur Verbesserung der Dichtheit kann zwischen Deckel und Gehäuse eine Dichtung angeordnet sein.

Das Leitelement kann formschlüssig in der Einlassöffnung gehalten sein. Dadurch ist das Leitelement fest der Einlassöffnung zugeordnet. Bevorzugt sind dabei die Einrichtung und/oder das Leitelement über eine Schnappverbindung an dem Deckel fixiert. Eine Schnappverbindung ist einfach und kostengünstig herstellbar und ermöglicht eine werkzeuglose Montage der Einrichtung an den Deckel. Die Schnappverbindung umfasst mehrere Schnapphaken, die vorzugsweise aus der Eirichtung ausgebildet sind, die Schnapphaken weisen Vorsprünge auf, die in kongruent geformte Ausnehmung eingreifen, die in den Deckel, beispielsweise in die Einlassöffnung des Deckels, eingebracht sind.

Alternativ oder zusätzlich kann die Einrichtung auch formschlüssig in der Auslassöffnung fixiert sein. Hierzu kann aus der Einrichtung eine Schnappverbindung ausgebildet sein, die formschlüssig in entsprechende Strukturen in der Auslassöffnung eingreifen.

Für die Ausgestaltung der formschlüssigen Verbindung, konkret der Schnappverbindung, kann die Einrichtung einen rohrförmigen Stutzen aufweisen, der in die Einlassöffnung eingesteckt ist. Aus dem freien Ende des Stutzens können umlaufend laschenartige Schnapphaken ausgebildet sein, die in eine umlaufende Nut formschlüssig eingreifen, wobei die Nut in die Innenwand der Einlassöffnung eingebracht sein kann.

Der Schnappverbindung kann ein Sicherungsmittel zugeordnet ein, welches ein unabsichtliches Lösen der Schnappverbindung verhindert. Hierzu kann in das freie Ende des Stutzens ein Sicherungsmittel in Form einer Sicherungshülse eingesetzt sein. Das Sicherungsmittel kann rohrförmig ausgebildet sein und an einer Stirnseite einen radial nach außen abragenden Bund aufweisen. Der Außendurchmesser der Sicherungsmittel entspricht vorzugsweise im Wesentlichen dem Innendurchmesser des durch die Schnapphaken gebildeten freien Endes des Stutzens, wenn die Schnapphaken in der Nut verrastet sind. Das Sicherungsmittel blockiert dabei die Schnapphaken und verhindert, dass sich diese radial nach innen bewegen und aus der Nut lösen. Dadurch kann verhindert werden, dass sich die Schnapphaken und damit die Einrichtung unabsichtlich von dem Deckel lösen.

Die Einrichtung kann mit einer Haltevorrichtung zur Aufnahme eines Trockenmittelbehältnisses ausgerüstet sein. Bei dieser Ausgestaltung ist vorteilhaft, dass das Trockenmittelbehältnis hängend in dem Gehäuse angeordnet sein kann, wobei das Trockenmittelbehältnis Einfluss auf die Strömung des Kältemittels nehmen kann. Dabei ist insbesondere vorteilhaft, dass das Trockenmittelbehältnis eine große Kontaktfläche zum Kältemittel aufweist und dadurch eine besonders gute Trockenwirkung aufweist.

Die Haltevorrichtung kann hakenförmig ausgebildet sein. Bei dieser Ausgestaltung weist das Trockenmittelbehältnis eine Durchbrechung auf, in die die Haltevorrichtung eingesteckt werden kann. Dadurch ist eine einfache Montage des Trockenmittelbehältnisses in dem Gehäuse möglich.

Das Trockenmittelbehältnis umfasst vorzugsweise ein poröses Material, welches in Form eines Beutels oder dergleichen ausbildet sein kann. Vorteilhafte poröse Materialien sind Vliesstoffe. Als Trockenmittel kann Silikagel zum Einsatz gelangen, welches in das Behältnis eingeführt ist. Das Trockenmittelbehältnis kann so ausgebildet sein, dass dieses ähnlich einem Beutel verhältnismäßig flach ist und demensprechend zwei Hauptseiten aufweist, diese können auch gebogen sein.

Der Auslassöffnung kann ein Saugrohr zugeordnet sein, welches sich vom Deckel bis zum Boden des Behälters erstreckt. Über das Saugrohr kann sich im Bodenbereich des Gehäuses ansammelndes Schmiermittel aus dem Akkumulator entfernt und dem Verdichter, bzw. Kompressor zugeführt werden.

Die Einrichtung kann einen Auslasskanal aufweisen, der in die Auslassöffnung mündet, wobei das Saugrohr in strömungsleitender Verbindung mit dem Auslasskanal steht. Dabei kann in dem Auslasskanal eine Querschnittsverengung ausgebildet sein. Im Bereich der Querschnittsverengung reduziert sich der Querschnitt vorzugsweise um ¼ bis ½ des Ausgangsquerschnitts. Zur Strömungshomogenisierung sind die Übergänge zu der Querschnittsverengung beidseitig konisch ausgebildet.

Vorzugsweise mündet das Saugrohr in dem Bereich der Querschnittsverengung in den Auslasskanal. Das Kältemittel strömt durch den Auslasskanal und wird im Bereich der Querschnittsverengung beschleunigt. Durch das Venturi-Prinzip bildet sich im Bereich der Querschnittsverengung ein Unterdruck aus, sodass über das Saugrohr zunächst Schmiermittel aus dem Bodenbereich des Gehäuses angesaugt wird und anschließend mit dem Kältemittel über die Auslassöffnung aus dem Akkumulator gefördert werden kann. Die Anordnung aus Auslasskanal und Saugrohr ist besonders kompakt und ermöglicht das Ansaugen von Schmiermittel, welches sich am Boden des Gehäuses ansammelt, in Richtung des dem Deckel zugeordneten Auslasskanals. Vorteilhaft ist insbesondere, dass für das Ansaugen und Fördern des Schmiermittels keinerlei Hilfsenergie erforderlich ist. Zusammen mit der Einrichtung kann das Saugrohr eine vormontierte Einheit bilden.

Der Auslasskanal kann formschlüssig in der Auslassöffnung fixiert sein. Vorzugsweise ist der Auslasskanal Teil der Einrichtung.

Einige Ausgestaltungen des erfindungsgemäßen Kältemittel-Akkumulators werden nachfolgend anhand der Figuren näher erläutert. Diese zeigen, jeweils schematisch:
- Fig. 1: ein Kältemittel-Akkumulator in dreidimensionaler Darstellung im Schnitt;
- Fig. 2: im Detail eine Einrichtung;
- Fig. 3: im Detail ein Leitelement;
- Fig. 4: im Detail die Schnappverbindung von Deckel und Einrichtung;
- Fig. 5: im Detail das Sicherungsmittel für die Einrichtung;
- Fig. 6: eine Einrichtung mit Trockenmittelbehältnis und Saugrohr;
- Fig. 7: eine Einrichtung mit Trockenmittelbehältnis und Saugrohr;
- Fig. 8: im Detail eine Einrichtung mit Haltevorrichtung und Trockenm ittelbehältnis;
- Fig. 9: die Einrichtung gemäß Fig. 8;
- Fig. 10: ein Gehäuse mit Einrichtung und Saugrohr;
- Fig. 11: die Einrichtung im Schnitt im Bereich des Auslasskanals;
- Fig. 12: in transparenter Darstellung das Gehäuse mit Deckel, alternativ ausgestalteter Einrichtung und Trockenmittelbehältnis;
- Fig. 13: eine alternativ ausgestaltete Einrichtung in der Seitenansicht;
- Fig. 14: die Einrichtung gemäß Fig. 13 in dreidimensionaler Darstellung;
- Fig. 15: die Einrichtung gemäß Fig. 13 in der Untersicht.

Die Figuren zeigen eine Kältemittel-Akkumulator 1, welcher Bestandteil eines Klimakreislaufs einer mobilen Klimaanlage ist. Die mobile Klimaanalage ist insbesondere die Klimaanlage eines Fahrzeugs. Die Klimaanlage umfasst einen geschlossenen Kreislauf, in welchem ein Kältemittel zirkuliert. Das Kältemittel wird durch einen Verdichter oder Kompressor verdichtet und gelangt anschließend in einen Kondensator, in welchem das Kältemittel verflüssigt wird. Nach dem Austritt aus dem Kondensator wird das Kältemittel einer Drossel zugeführt und strömt anschließend zum Verdampfer, wo das Kältemittel Wärme aufnimmt. Anschließend wird das Kältemittel dem Akkumulator 1 zugeführt. In dem Akkumulator werden flüssige Bestandeile aus dem Kältemittel abgeschieden und anschließend wieder dem Verdichter oder Kompressor zugeführt.

Der Kältemittel-Akkumulator 1 umfasst ein Gehäuse 2, welches im Wesentlichen zylindrisch ausgebildet ist und demensprechend eine Zylinderwand 13 und einen Boden 11 aufweist. Auf der dem Boden 11 gegenüberliegenden Seite ist das Gehäuse 2 durch einen Deckel 8 verschlossen. In den Deckel 8 ist eine Einlassöffnung 3 und eine Auslassöffnung 4 eingebracht. In dem Gehäuse 2 ist eine Einrichtung 5 angeordnet, die der Einlassöffnung 3 und der Auslassöffnung 4 zugeordnet ist.

Die Einrichtung 5 weist ein Leitelement 6 zur Beeinflussung der Strömung des über die Einlassöffnung 3 in das Gehäuse 2 einströmenden Kältemittels auf. Das Leitelement 6 ist aus der Einrichtung 5 ausgeformt und mit einem abschnittsweise gebogenen Kanal 7 versehen. Durch den abschnittsweise gebogenen Kanal 7 wird das über die Einlassöffnung 3 in das Gehäuse 2 einströmende Kältemittel auf eine Kreisbahn gelenkt und es bildet sich innerhalb des Gehäuses 2 ein Wirbelstrom aus. Durch die Zentrifugalkraft scheidet sich aus dem Kältemittel flüssiges Schmiermittel ab. Das Schmiermittel wird aus dem Kältemittel an die Zylinderwand 13 geschleudert und sammelt sich am Boden 11 an.

Der Auslassöffnung 4 ist ein Saugrohr 10 zugeordnet, welches sich vom Deckel 8 bis zum Boden 11 des Gehäuses 2 erstreckt. Die Einrichtung 5 weist einen Auslasskanal 12 auf, der in die Auslassöffnung 4 mündet. Der Auslasskanal 12 ist aus der Einrichtung 5 ausgeformt. Das Saugrohr 10 mündet im Bereich einer Querschnittsverengung 15 in den Auslasskanal 12. Strömt Kältemittel durch den Auslasskanal 12, bildet sich im Bereich der Querschnittsverengung 15 ein Unterdruck aus, der es ermöglicht, über das Saugrohr 10 Schmiermittel vom Boden 11 des Gehäuses 2 anzusaugen und mit dem Kältemittel über die Auslassöffnung 4 aus dem Akkumulator 1 zu fördern.

Die Einrichtung 5 ist aus Kunststoff ausgebildet und im Spritzgießverfahren hergestellt. Die Einrichtung 5 ist formschlüssig an dem Deckel 8 gehalten. Dabei sind Formschlusselemente aus dem Leitelement 6 und dem Auslasskanal 12 ausgebildet, welche in entsprechend geformte Ausnehmungen in der Einlassöffnung 3 und der Auslassöffnung 4 eingreifen. Durch die Formschlusselement ergibt sich eine Schnappverbindung zwischen der Einrichtung 5 und dem Deckel 8.

Die Einrichtung 5 ist mit einer Haltevorrichtung 9 zur Aufnahme eines Trockenmittelbehältnisses 20 ausgerüstet. Die Haltevorrichtung 9 ist hakenförmig ausgebildet und nimmt ein Trockenmittelbehältnis 20 auf, welches hängend an der Haltevorrichtung 9 gehalten ist. Das Trockenmittelbehältnis 20 ist in Form einer Tasche ausgebildet, welche entlang der Kanten verschlossenen ist. Das Trockenmittelbehältnis ist aus porösem Material, hier Vliesstoff, ausgebildet. Im Bereich einer Kante des Trockenmittelbehältnisses 20 ist eine Durchbrechung 14 angebracht, in welche die Haltevorrichtung 9 eingesteckt ist.

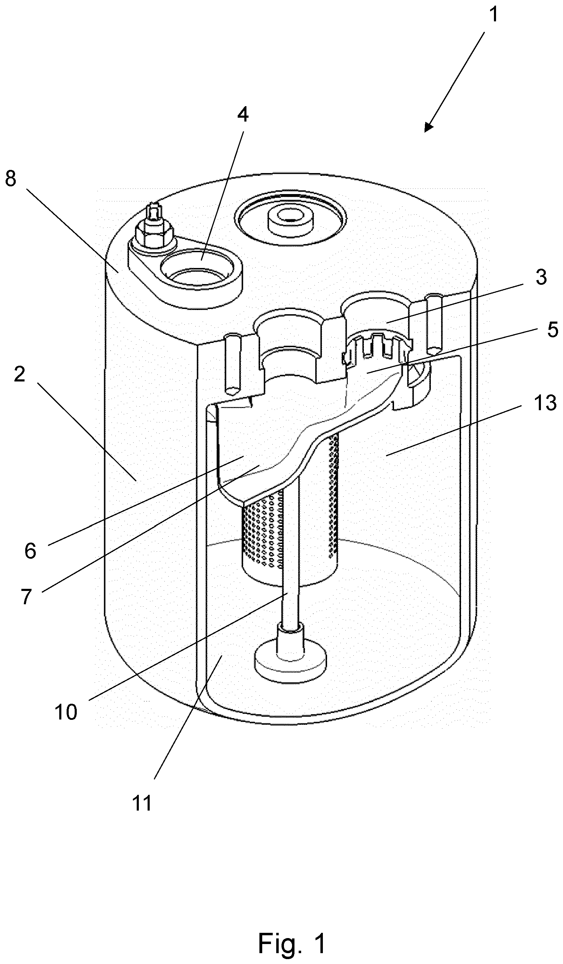

Fig. 1 zeigt den Kältemittel-Akkumulator 1 in dreidimensionaler Darstellung im Schnitt. Das aus der Einrichtung 5 ausgebildete Leitelement 6 mündet in die in den Deckel 8 eingebrachte Einlassöffnung 3. Dabei ist aus dem Leitelement 6 ein Stutzen 25 ausgebildet, der in die Einlassöffnung 3 ragt. An dem freien Ende des Stutzens 25 sind umlaufend laschenartige Schnapphaken 22 ausgebildet, die in eine umlaufende Nut 19 formschlüssig eingreifen, die in die Innenwand der Einlassöffnung 3 eingebracht ist.

Ausgehend von der Einlassöffnung 3 geht der Stutzen 25 in einen radial verlaufenden, spiralförmig gebogenen Kanal 7 über. Das durch den Kanal 7 strömende Kältemittel wird dadurch eine Kreisbahn umgelenkt und strömt an der Zylinderwand 13 des Gehäuses 2 entlang in das Innere des Akkumulators 1.

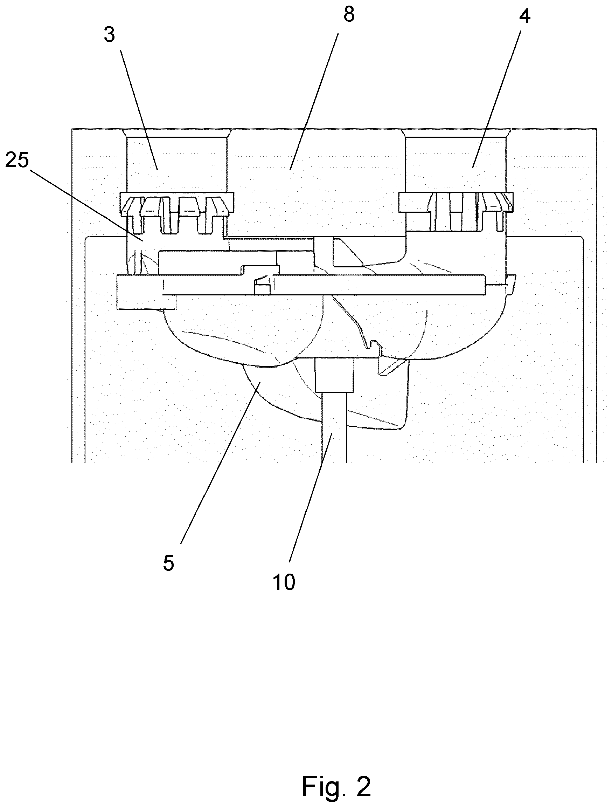

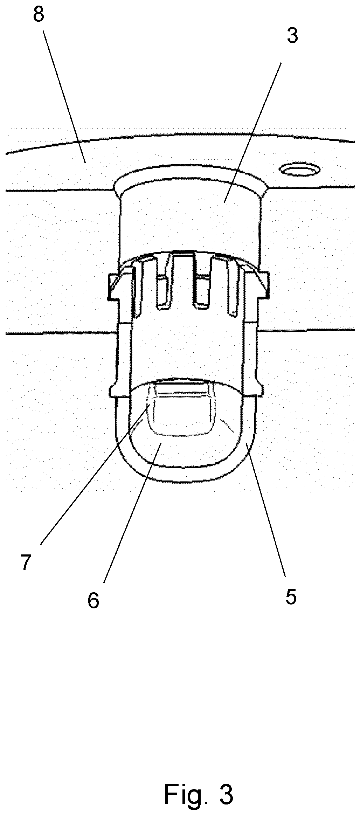

**Fig. 2** zeigt die Einrichtung 5 im Detail. Dabei ist zu erkennen, dass sowohl aus dem der Einlassöffnung 3 zugeordneten Stutzen 25 als auch aus dem der Auslassöffnung 4 zugeordneten Stutzen umlaufend Schnapphaken 22 ausgebildet sind, die in umlaufende Nuten 19 formschlüssig eingreifen, die in die Innenwand der Einlassöffnung 3 und der Auslassöffnung 4 eingebracht sind. Diese Befestigung zeigt im Detail auch **Fig. 3****.**

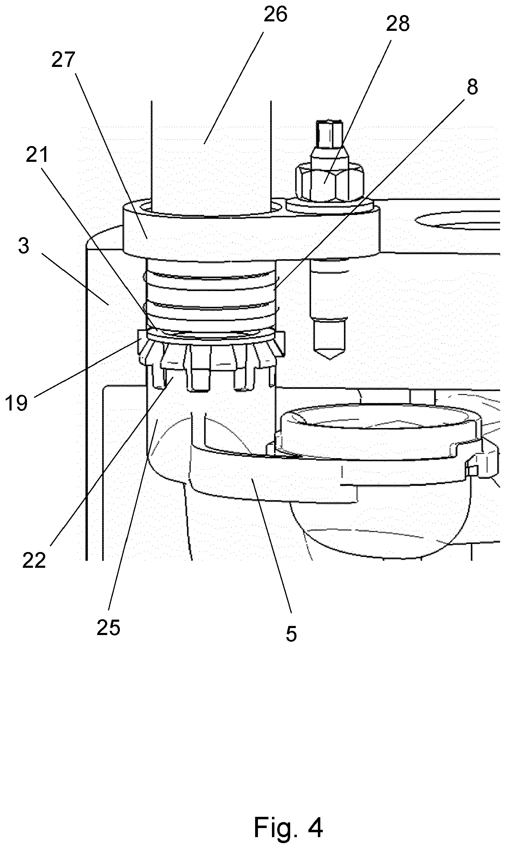

**Fig. 4** zeigt im Detail die über die Schnappverbindung zwischen Deckel 8 und Einrichtung 5 im Bereich der Einlassöffnung 3. Die Einrichtung 5 weist einen rohrförmigen Stutzen 25 auf, der in die Einlassöffnung 3 eingesteckt ist. An dem freien Ende des Stutzens 25 sind umlaufend laschenartige Schnapphaken 22 ausgebildet, die in die umlaufende Nut 19 formschlüssig eingreifen, die in die Innenwand der Einlassöffnung 3 eingebracht ist.

In die Einlassöffnung 3 ist ein Rohr 26 eingesteckt, welches über einen Flansch 27 und ein Befestigungselement 28 an dem Deckel 8 festgelegt ist. Das Rohr 26 ist mit Dichtungen versehen, welche dichtend an der Innenwand der Einlassöffnung 3 anliegen.

Bei der in **Fig. 4** gezeigten Ausgestaltung ist in das freie Ende des Stutzens 25 ein Sicherungsmittel 21 in Form einer Sicherungshülse eingesetzt. Das Sicherungsmittel 21 ist rohrförmig ausgebildet und weist an einer Stirnseite einen radial nach außen abragenden Bund 24 auf. Der Bund 24 liegt auf der Stirnseite des Stutzens 25 an und verhindert, dass das Sicherungsmittel 21 gänzlich in den Stutzen 25 rutscht. Der Außendurchmesser des Sicherungsmittels 21 entspricht im Wesentlichen dem Innendurchmesser des durch die Schnapphaken 22 gebildeten freien Endes des Stutzens 25, wobei die Schnapphaken 22 in der Nut 19 verrastet sind. Das Sicherungsmittel 21 blockiert die Schnapphaken 22 und verhindert, dass sich diese radial nach innen bewegen. Dadurch kann verhindert werden, dass sich die Schnapphaken 22 und damit die Einrichtung 5 unabsichtlich von dem Deckel 8 löst. Insbesondere kann verhindert werden, dass sich die Schnapphaken 22 während der Montage des Rohres 26 lösen.

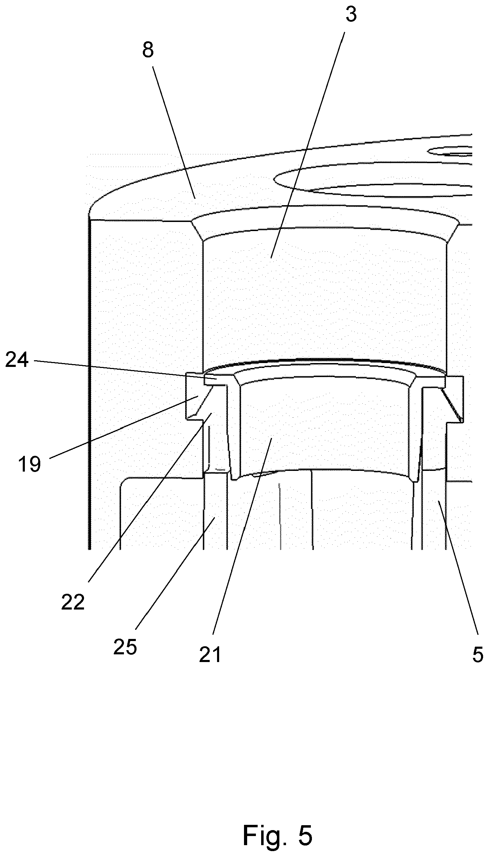

**Fig. 5** zeigt im Detail die Ausgestaltung gemäß **Fig. 4** mit dem Stutzen 25 der Einrichtung 5 samt Schnapphaken 22 sowie den Deckel 8 und das Sicherungsmittel 21 im Schnitt.

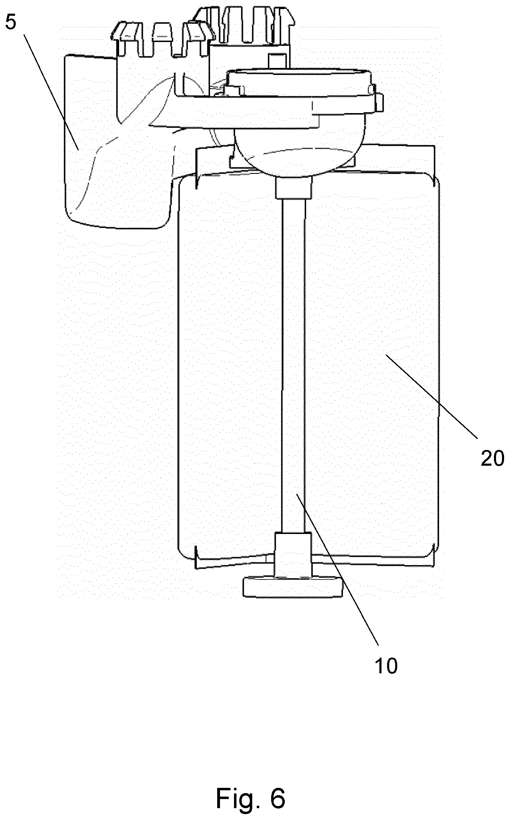

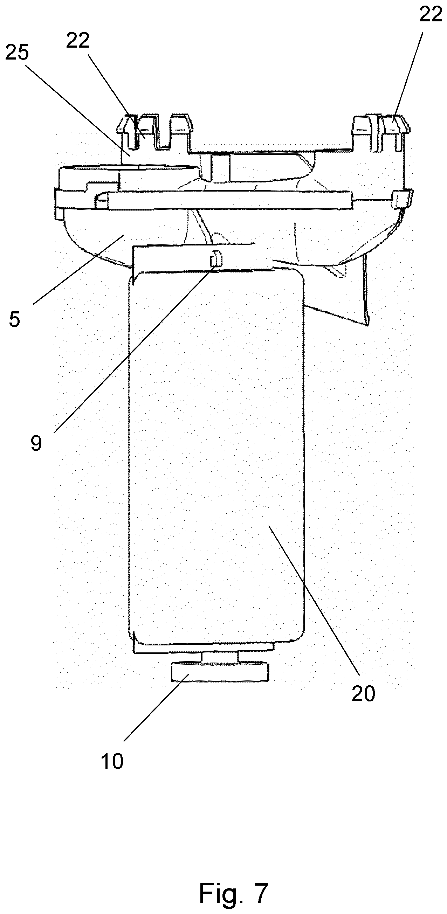

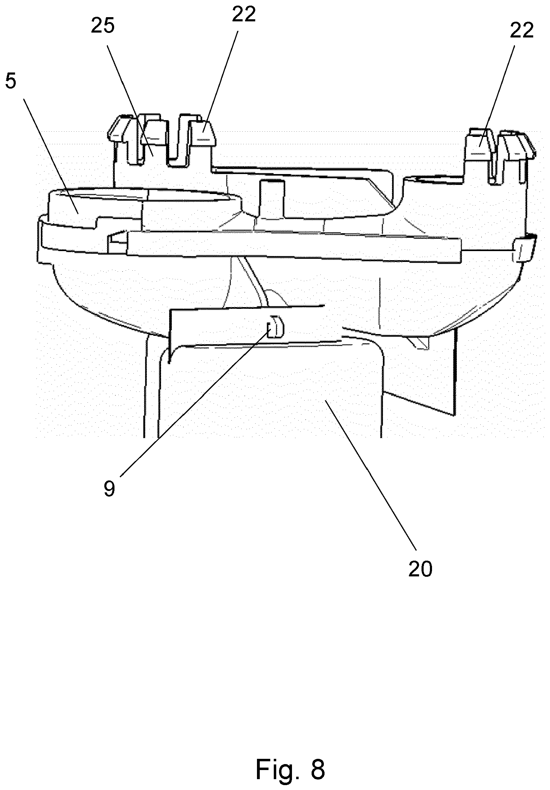

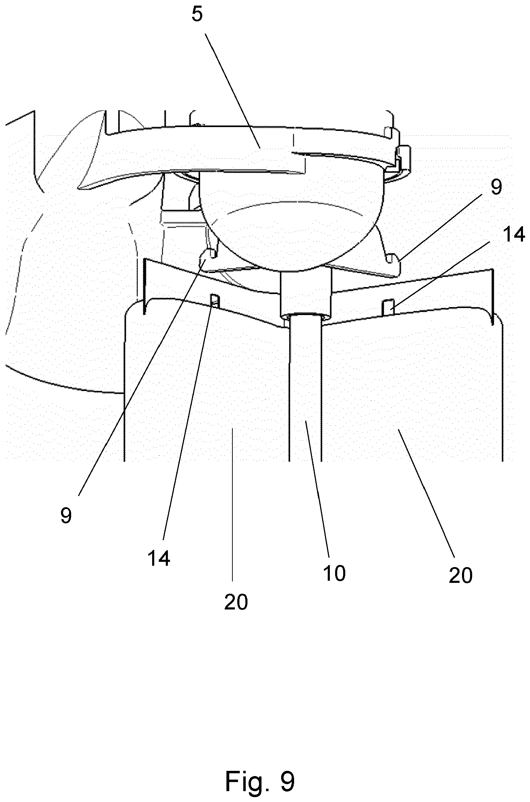

**Fig. 6** zeigt eine Anordnung aus Einrichtung 5, Saugrohr 10 und Trockenmittelbehältnis 20 in der Rückansicht. **Fig. 7** zeigt die Anordnung gemäß **Fig. 6** in der Vorderansicht. **Fig. 8** zeigt im Detail die Einrichtung 5 im Bereich der Haltevorrichtung 9, einschließlich des an der Haltevorrichtung 9 befestigten Trockenmittelbehältnisses 20. **Fig. 9** zeigt die Einrichtung gemäß **Fig. 8** in der Rückansicht. Zur besseren Illustration sind die Trockenmittelbehältnisse 20 mit den Durchbrechungen 14 von den Haltevorrichtungen 9 beabstandet dargestellt. Bei der in den **Fig. 6** bis **9** dargestellten Einrichtung sind jeweils 2 Trockenmittelbehältnisse 20 vorgesehen, welche über die Haltevorrichtung 9 hängend an der Einrichtung 5 fixiert sind. Hierzu ragen die Haltevorrichtungen 9 durch die Durchbrechungen 14 der Trockenmittelbehältnisse 20 hindurch.

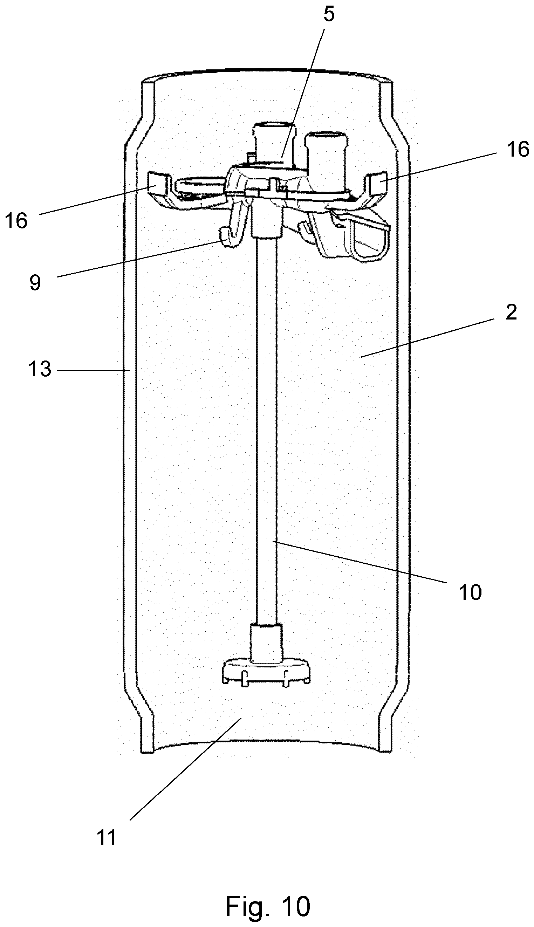

**Fig. 10** zeigt eine transparente Darstellung eines Gehäuses 2 mit darin angeordneter Einrichtung 5 mit Saugrohr 10 und alternativ ausgestalteten Verbindungselementen 16 zur Befestigung der Einrichtung 5 am Deckel 8.

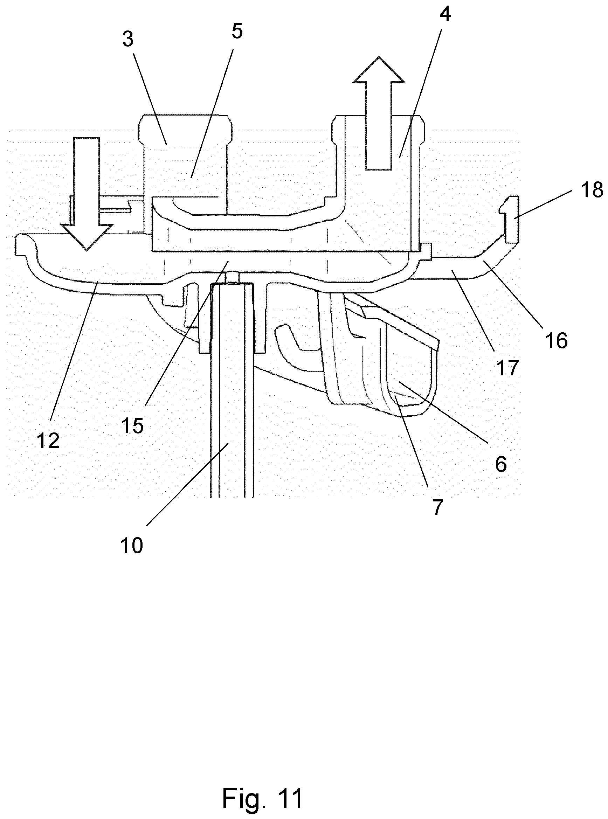

**Fig. 11** zeigt im Detail die Einrichtung 5 im Bereich des Auslasskanals 12 im Schnitt. Bei dieser Ausgestaltung sind aus der Einrichtung 5 Verbindungselemente 16 ausgebildet, welche formschlüssig in den Deckel 8 eingreifen. Die Verbindungselemente 16 umfassen Stege 17, welche sich radial in Richtung der Zylinderwand 13 erstrecken. An den freien Enden der Stege 17 sind gebogenen Schnapphaken 18 ausgebildet, die in eine in den Deckel 8 umfangsseitig eingebrachte Ausnehmung in Form einer umlaufenden Nut 19 eingreifen.

Die Einrichtung 5 weist einen Auslasskanal 12 auf, der in die Auslassöffnung 4 mündet. Der Auslasskanal 12 ist aus der Einrichtung 5 ausgeformt. Das Saugrohr 10 mündet im Bereich einer Querschnittsverengung 15 in den Auslasskanal 12. Im Bereich der Querschnittsverengung 15 verengt sich der Querschnitt des Auslasskanals 12 um ¼ bis ½ des Ausgangsquerschnitts. Strömt Kältemittel durch den Auslasskanal 12, bildet sich im Bereich der Querschnittsverengung 15 aufgrund des Venturi-Prinzips ein Unterdruck aus, der es ermöglicht, über das Saugrohr 10 Schmiermittel vom Boden 11 des Gehäuses 2 anzusaugen und mit dem Kältemittel über die Auslassöffnung 4 aus dem Akkumulator 1 zu fördern. Die Ausgestaltung des Auslasskanals 12 mit Querschnittsverengung 15 und darin mündendem Saugrohr 10 ist unabhängig von der Ausgestaltung der Befestigung der Einrichtung 5 an dem Deckel 8 und ist dementsprechend auch in der Einrichtung 5 gemäß **Fig. 2** bis **7** realisiert.

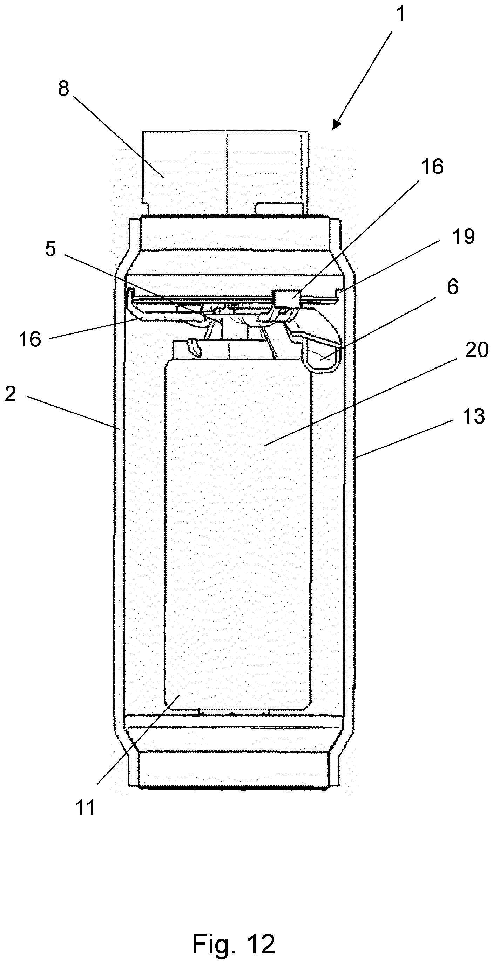

**Fig. 12** zeigt eine transparente Darstellung eines Gehäuses 2 mit darin angeordneter Einrichtung 5 mit Trockenmittelbehältnis 20 und alternativ ausgestalteten Verbindungselementen 16 zur Befestigung der Einrichtung 5 am Deckel 8.

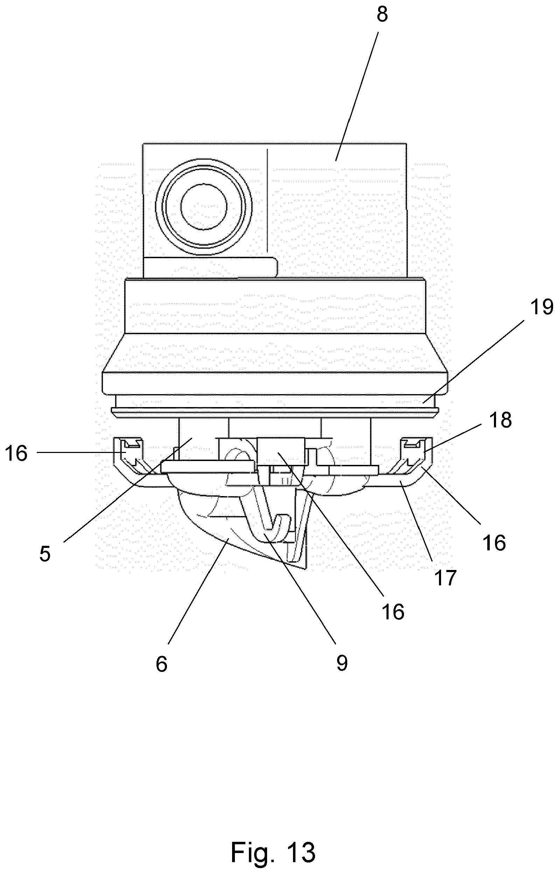

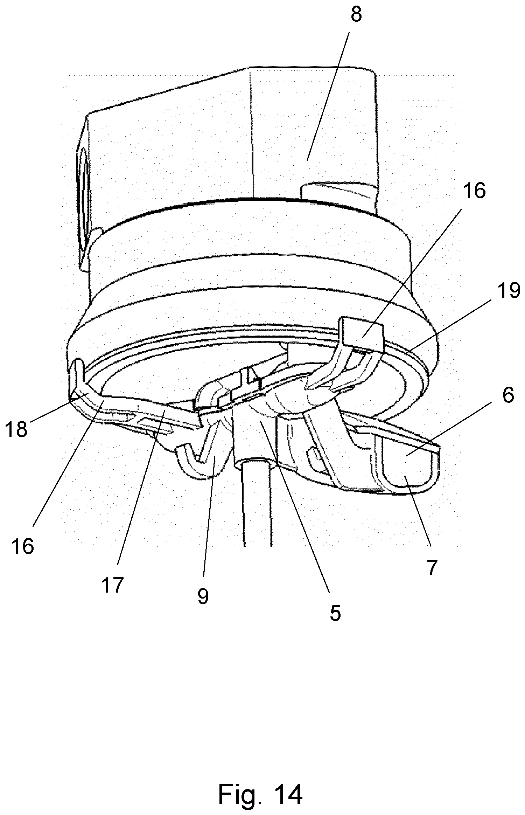

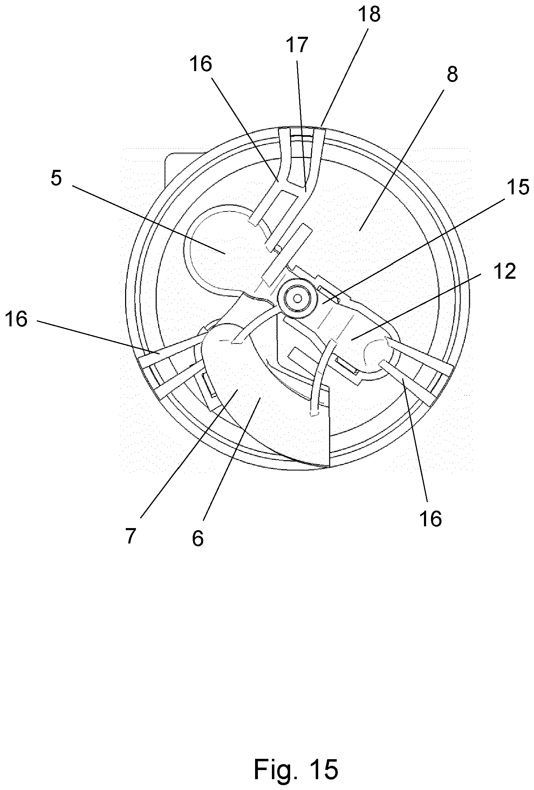

**Fig. 13** zeigt im Detail die Einrichtung 5 vor der Montage am Deckel 8. **Fig. 14** zeigt die Einrichtung 5 montiert am Deckel in dreidimensionaler Darstellung und **Fig. 15** zeigt die Einrichtung 5 gemäß **Fig. 14** in der Untersicht.

## Patentansprüche

1. Kältemittel-Akkumulator (1), umfassend ein Gehäuse (2) mit zumindest einer Einlassöffnung (3) und zumindest einer Auslassöffnung (4), wobei in dem Gehäuse (2) eine Einrichtung (5) angeordnet ist, wobei die Einrichtung der Einlassöffnung (3) und/oder der Auslassöffnung (4) zugeordnet ist.

2. Kältemittel-Akkumulator nach Anspruch 1, **dadurch gekennzeichnet, dass** die Einrichtung (5) ein Leitelement (6) zur Beeinflussung der Strömung des über die Einlassöffnung (3) in das Gehäuse (2) einströmenden Kältemittels aufweist.

3. Kältemittel-Akkumulator nach Anspruch 2, **dadurch gekennzeichnet, dass** das Leitelement (6) einen abschnittsweise gebogenen Kanal (7) aufweist.

4. Kältemittel-Akkumulator nach einem der Ansprüche 1 bis 3, **dadurch gekennzeichnet, dass** das Gehäuse (2) durch einen Deckel (8) verschlossen ist, wobei die Einlassöffnung (3) und die Auslassöffnung (4) in den Deckel (8) eingebracht sind.

5. Kältemittel-Akkumulator nach Anspruch 4, **dadurch gekennzeichnet, dass** die Einrichtung (5) formschlüssig an dem Deckel (8) gehalten ist.

6. Kältemittel-Akkumulator nach einem der Ansprüche 2 bis 5, **dadurch gekennzeichnet, dass** das Leitelement (6) formschlüssig in der Einlassöffnung (3) gehalten ist.

7. Kältemittel-Akkumulator nach einem der Ansprüche 4 bis 6, **dadurch gekennzeichnet, dass** die Einrichtung (5) und/oder das Leitelement (6) über eine Schnappverbindung an dem Deckel (8) fixiert sind.

8. Kältemittel-Akkumulator nach Anspruch 7, **dadurch gekennzeichnet, dass** der Schnappverbindung ein Sicherungsmittel (21) zugeordnet ist.

9. Kältemittel-Akkumulator nach einem der Ansprüche 1 bis 7, **dadurch gekennzeichnet, dass** die Einrichtung (5) mit einer Haltevorrichtung (9) zur Aufnahme eines Trockenmittelbehältnisses (20) ausgerüstet ist.

10. Kältemittel-Akkumulator nach Anspruch 9, **dadurch gekennzeichnet, dass** in dem Gehäuse (2) ein Trockenmittelbehältnis (20) angeordnet ist, welches an der Haltevorrichtung (9) gehalten ist.

11. Kältemittel-Akkumulator nach einem der Ansprüche 4 bis 10, **dadurch gekennzeichnet, dass** der Auslassöffnung (4) ein Saugrohr (10) zugeordnet ist, welches sich vom Deckel (8) bis zum Boden (11) des Gehäuses (2) erstreckt.

12. Kältemittel-Akkumulator nach einem der Ansprüche 1 bis 11, **dadurch gekennzeichnet, dass** die Einrichtung (5) einen Auslasskanal (12) aufweist, der in die Auslassöffnung (4) mündet, wobei das Saugrohr (10) mit dem Auslasskanal (12) in Strömungsverbindung steht.

13. Kältemittel-Akkumulator nach Anspruch 12, **dadurch gekennzeichnet, dass** der Auslasskanal (12) eine Querschnittsverengung (15) aufweist.

14. Kältemittel-Akkumulator nach Anspruch 13, **dadurch gekennzeichnet, dass** das Saugrohr (10) im Bereich der Querschnittsverengung (15) in den Auslasskanal (12) der Einrichtung (5) mündet.

15. Kältemittel-Akkumulator nach einem der Ansprüche 12 bis 14, **dadurch gekennzeichnet, dass** der Auslasskanal (12) formschlüssig in der Auslassöffnung (4) fixiert ist.
